# EUROPEAN PATENT APPLICATION

(11) **EP 1 300 760 A2**
(43) Date of publication of application: **09.04.2003**
(21) Application number: 02256533.7
(22) Date of filing: 20.09.2002
(51) Int. Cl.: G06F 9/44

(54) **Screen transition diagram editor**

(30) Priority: 05.10.2001 JP 2001310492
(71) Applicant: Cats Co., Ltd, Yokohama, Kanagawa 224-0034 (JP)
(72) Inventor: Murakami, Shinchiro, c/o Cats Co., Ltd., Yokohama, Kanagawa 224-0034 (JP)
(74) Representative: Nicholls, Michael John

(57) **Abstract**

A screen transition diagram editing apparatus includes a screen layout editor which creates and edits screen layout charts that are used in screen transition diagrams and show individual transitional screens, a screen transition diagram editor which creates and edits the screen transition diagrams each associated with the screen layout charts, and a storage section which separately stores the screen layout charts and the screen transition diagrams. The screen layout editor creates the screen layout charts in a hierarchical structure. Therefore, the screen transition diagrams can be easily created.

## Description

This invention relates to a technology of creating and editing screen transition diagrams which show the transition states of a screen.

Conventionally, when a screen transition diagram which shows the transition state of a screen is created and edited, it has been common to use a general drawing tool, for example, Microsoft VISIO ("Microsoft" and "Visio" are trademarks of Microsoft Corporation) . That is, such a method is commonly used that a plurality of individual transitional screen layout charts are created on an editing screen of such a common drawing tool, and respective screen layout charts are linked by an arrow or the like, using components of the drawing tool, and characters indicating an event which triggers the transition of the screen are inserted in the arrow information, to thereby create and store the screen transition diagram.

With such a method using the common drawing tool, however, the screen layout chart used in the screen transition diagram is stored in a file of one created screen transition diagram. Therefore, when the same screen layout chart is to be used in another screen transition diagram, it is necessary to open the already prepared screen transition diagram and take the screen layout chart to be used into the screen transition diagram which is now being prepared, by a method of cut and paste, thereby causing a problem in that the user's operation becomes complicated.

In screen designing of complicated equipment, since the number of screens to be displayed is huge and patterns of the screen transition are diversified, an operation for searching a necessary screen layout chart is required during preparation of a screen transition diagram, thereby causing a problem in that labor for managing the screen layout charts and the screen transition diagrams increases.

It is an object of the present invention to obtain a screen transition diagram editing apparatus and a screen transition diagram editing program, which can simplify user operation and reduce the labor for management of charts and diagrams.

The screen transition diagram editing apparatus according to one aspect of this invention includes a screen layout editing unit that creates and edits screen layout charts which are used in screen transition diagrams each showing a transition state of screens, and which show individual transitional screens. The apparatus also includes a screen transition diagram editing unit which creates and edits the screen transition diagrams each associated with the screen layout charts, and a storage unit which stores the screen layout charts and the screen transition diagrams separately.

The screen transition diagram editing program according to another aspect of this invention, causes a computer to execute a step of creating and editing screen layout charts which are used in screen transition diagrams each showing a transition state of screens and which show individual transitional screens. The program also causes the computer to execute steps of creating and editing the screen transition diagrams each associated with the screen layout charts, and storing the screen layout charts and the screen transition diagrams separately.

The present invention will be further described by way of example with reference to the accompanying drawings, in which:-
Fig. 1 is a block diagram which shows a software configuration of a screen transition diagram editing apparatus as one embodiment of this invention,
Fig. 2 is an explanatory diagram which shows a configuration of a storage folder of each file controlled by the screen transition diagram editing apparatus in this embodiment,
Fig. 3 is a flowchart which shows a procedure of creating a screen layout chart by a screen layout editor 120,
Fig. 4 is a flowchart which shows a procedure of creating a screen transition diagram by a screen transition diagram editor 110,
Fig. 5 is a schematic diagram which shows an example of a screen transition diagram 134 being edited by the screen transition diagram editor 110,
Fig. 6A is a schematic diagram which shows an example of a screen layout chart of screen A which is now being edited by the screen layout editor 120, Fig. 6B is a screen layout chart of screen B, Fig. 6C is a screen layout chart of backgrounds, and Fig. 6D is a schematic diagram which shows a screen layout chart of a button,
Fig. 7 is an explanatory diagram which shows the content of an XML file in a project file, when the screen transition diagram and the screen layout charts shown in Fig. 5 and Figs. 6A to 6D are prepared,
Fig. 8 is an explanatory diagram which shows the content of an XML file of the screen transition diagram created based on the screen transition diagram prepared or edited by the screen transition diagram editor 110,
Fig. 9A is an explanatory diagram which shows the content of an XML file of the screen layout chart created based on a screen layout chart on screen A prepared or edited by the screen layout editor 120, and Fig. 9B is an explanatory diagram which shows the contents of an XML file of a screen layout chart on screen B,
Fig. 10A is an explanatory diagram which shows the content of an XML file of the screen layout chart created based on an XML file of a background prepared or edited by the screen layout editor 120, and Fig. 10B is an explanatory diagram which shows the contents of an XML file of a screen layout chart of a button,
Fig. 11 is an explanatory diagram which shows the content of an XML file of an event manager file in which an event "press button" is registered in the screen transition diagram shown in Fig. 5, and
Fig. 12 is a block diagram which shows the hardware configuration of the screen transition diagram editing apparatus in this embodiment.

Embodiments of the screen transition diagram editing apparatus and the screen transition diagram editing program according to the present invention will now be explained in detail with reference to the accompanying drawings.

### Hardware configuration of the screen transition diagram editing apparatus:

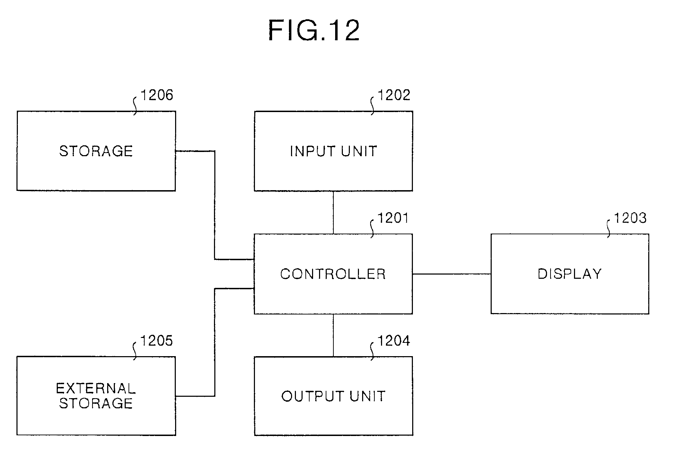

Fig. 12 is a block diagram which shows the hardware configuration of a screen transition diagram editing apparatus as an embodiment of this invention. As shown in Fig. 12, this screen transition diagram editing apparatus comprises a controller 1201 such as a CPU, a storage device 1206 such as a ROM (Read Only memory) and a RAM (Random Access Memory) , an external storage device 1205 such as a hard disk, a hard disk drive (HDD) and a CD drive, an output unit 1204 such as a printer, a display 1203 such as a display device, and an input unit 1202 such as a keyboard and a mouse, which is a ordinary construction using a computer.

The screen transition diagram editing program in a first embodiment of this invention is stored in a hard disk, a CD or a floppy disk as the external storage device 1205, and is executed by loading the program from any of these external storage devices 1205 to the RAM as the storage device 1206. Moreover, a program source file created from screen transition diagrams, screen layout charts, and other various files and screen transition diagrams are stored in the hard disk.

Screen transition diagrams and screen layout charts are displayed on the display 1203, and these diagrams and charts are completed through the input unit 1202 such as a keyboard and a mouse. The printer which is the output unit 1204 outputs the created screen transition diagrams and screen layout charts.

The screen transition diagram editing program executed on the screen transition diagram editing apparatus in this embodiment is provided in a file of a type installable in a CD-ROM or an FD. Such installable type files may be provided by being downloaded from a network.

### Software configuration of the screen transition diagram editing apparatus:

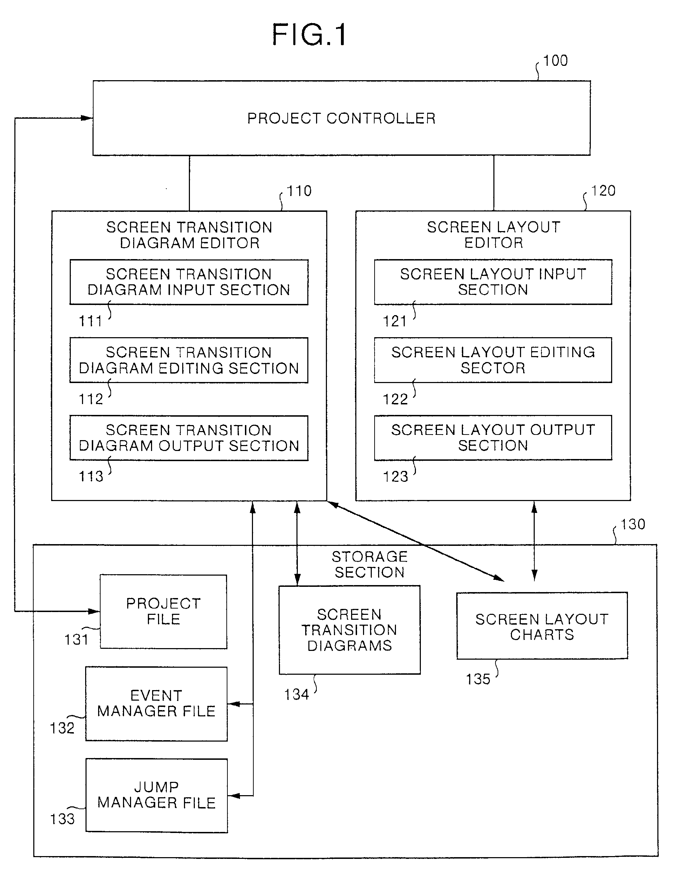

Fig. 1 is a block diagram which shows the configuration of the screen transition diagram editing apparatus, being the embodiment of this invention. The screen transition diagram editing apparatus in this embodiment comprises, as shown in Fig. 1, a project controller 100, a screen transition diagram editor 110, a screen layout editor 120, and a storage section 130.

The project controller 100 is used to create a project file for holding and controlling respective file names of screen transition diagrams and screen layout charts and to determine screen layout IDs for identifying screen layout charts, screen transition diagram IDs for identifying screen transition diagrams, status IDs created in screen transition diagrams for identifying state frames for displaying screen layout charts, and event IDs for identifying events which give a trigger for screen transitions.

The screen transition diagram editor 110 is used to create and edit screen transition diagrams. The editor 110 comprises a screen transition diagram input section 111 which inputs screen transition diagrams, a screen transition diagram editing section 112 which performs processing in the editing work of the screen transition diagrams, and a screen transition diagram output section 113 which stores the created or edited screen transition diagrams in the storage section 130. The screen transition diagram editor 110 constitutes a screen transition diagram editing unit in the present invention.

The screen layout editor 120 is used to create and edit screen layout charts . The editor 120 comprises a screen layout input section 121 which inputs screen layout charts, a screen layout editing section 122 which performs processing in the editing work of the screen layout charts, and a screen layout output section 123 which stores the created or edited screen layout charts in the storage section 130. The screen layout editor 120 constitutes the screen layout editing unit in the present invention.

The storage section 130 is used to store a project file 131, an event manager file 132, a jump manager file 133, screen transition diagrams 134 and screen layout charts 135, and constitutes the storage unit of the present invention.

The event manager file 132 records a correspondence between the event names and the event IDs of the events. The jump manager file 133 records a correspondence between names of jumps each of which is a symbol indicating a destination to jump from a screen layout chart and jump IDs for identifying the jumps.

The screen layout chart 135 is one obtained by drawing an image displayed on the screen of target equipment to be developed, and includes components displayed on the screen such as buttons and the background. The screen transition diagram 134 is a diagram displaying the transition state of these screen layout charts. The diagram 134 comprises a plurality of screen layout charts, a plurality of events, a plurality of arrows indicating transition between the plurality of screen layout charts, and a plurality of jumps. Each file in the storage section 130 is displayed only one at a time on the screen, but actually, it is possible to store a plurality of files.

The screen transition diagram editing apparatus in this embodiment can control these components separately, so that creating and editing of the screen transition diagrams are possible, without requiring for the user to give special consideration to identifiers and file names of respective components.

### Control method in the screen transition diagram editing apparatus:

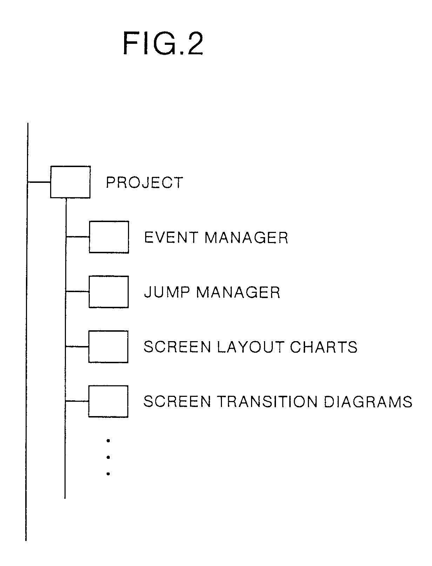

Fig. 2 is an explanatory diagram which shows the configuration of a storage folder of each file controlled by the screen transition diagram editing apparatus in this embodiment. As shown in Fig. 2, a "project" folder is prepared, and the "project" folder has a project file, an "event manager" folder, a "jump manager" folder, a "screen layout chart" folder, and a "screen transition diagram" folder created therein. Such a project folder and the subordinate folders thereof are automatically prepared by the project controller 100 when the user instructs creation of the project file.

An event manager file 132 is created in the "event manager" folder, and a jump file is created in the "jump manager" folder. A plurality of screen layout charts are created in the "screen layout chart" folder, and a plurality of "screen layout chart" folders are created in the "screen transition diagram" folder. Distribution of respective files into respective folders is automatically performed by the screen transition diagram editor 110 and the screen layout editor 120, and readout is also performed automatically. Therefore, it is not necessary for a user to give special consideration to a place where each file is stored, thereby improving the usability.

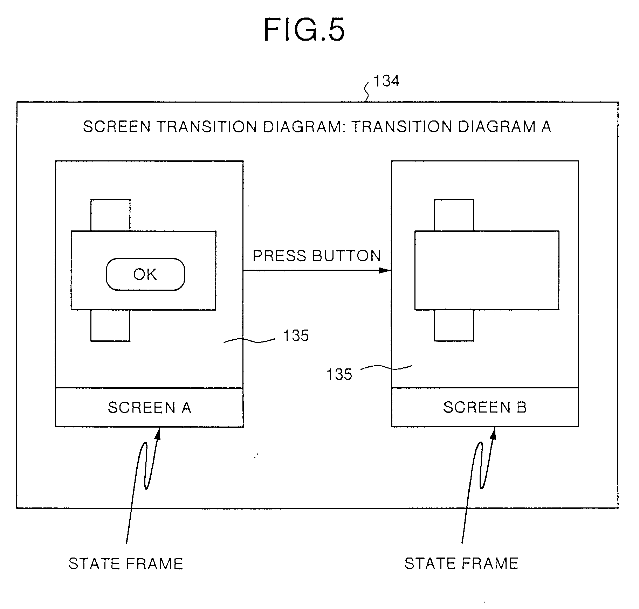

The screen transition diagram 134 and the screen layout chart 135 created in the screen transition diagram editing apparatus in this embodiment will now be explained. Fig. 5 is a schematic diagram which shows an example of the screen transition diagram 134 being edited by the screen transition diagram editor 110.

The screen transition diagram shown in Fig. 5 has two state frames. The state frame mentioned here indicates a screen condition of a display screen of a target equipment to be developed, and a screen layout chart is displayed therein. In the example shown in Fig. 5, there are two states, the state on screen A (referred to as "state 1") and the state on screen B (referred to as "state 2"). This screen transition diagram shows that when there is an event of pressing the button in the state on screen A, the state changes to the state on screen B indicated by a rightward arrow. Here, the screen A and the screen B are both screen layout charts.

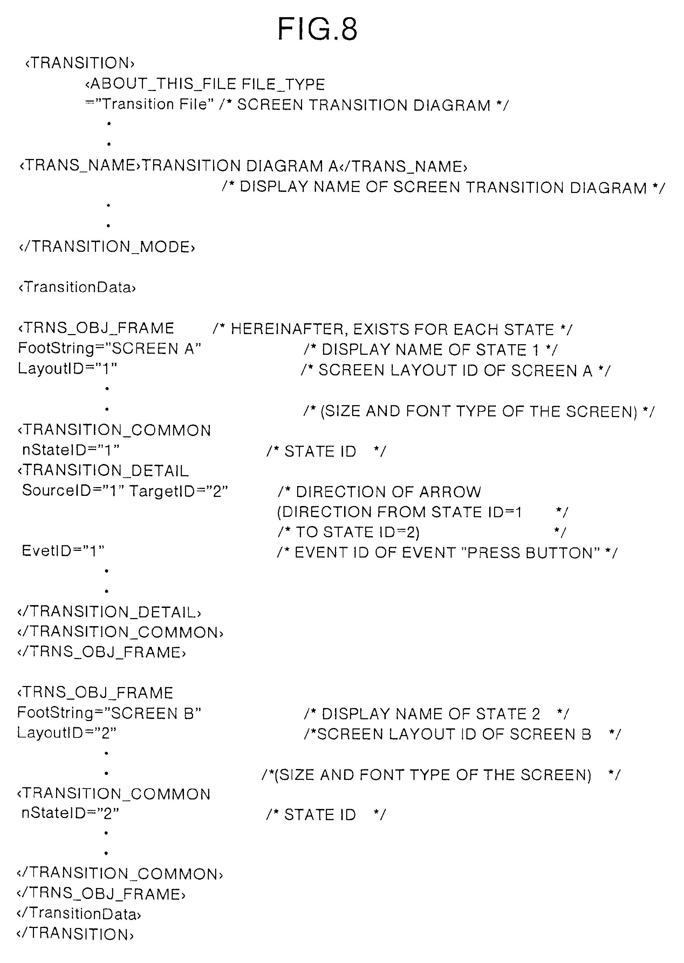

Fig. 8 is an explanatory diagram which shows the content of an XML (extensible Markup Language) file of a screen transition diagram created based on a screen transition diagram prepared or edited by the screen transition diagram editor 110. As shown in Fig. 8, in the XML file of this screen transition diagram, "Transition File" indicating a file type is automatically set, and a display name of the screen transition diagram specified by a user is set. As shown in Fig. 8, a screen of each state, a screen layout ID, an event, the direction of the arrow (state IDs of the source state and the target state) and an event ID of a screen layout chart displayed on the state frame, are set for each state frame. In other words, the screen transition diagram holds all the screen layout charts and events to be displayed in the transition diagram by each ID. Therefore, when a screen transition diagram is read in by the screen transition diagram editor for the editing work, the screen layout chart and event specified by each ID are automatically displayed. Consequently, users can save time and labor for searching each screen layout chart from the file system, in the editing work of the screen transition diagram, and hence the editing work can be made more efficient. The processing of creating an XML file of this screen transition diagram will be described later.

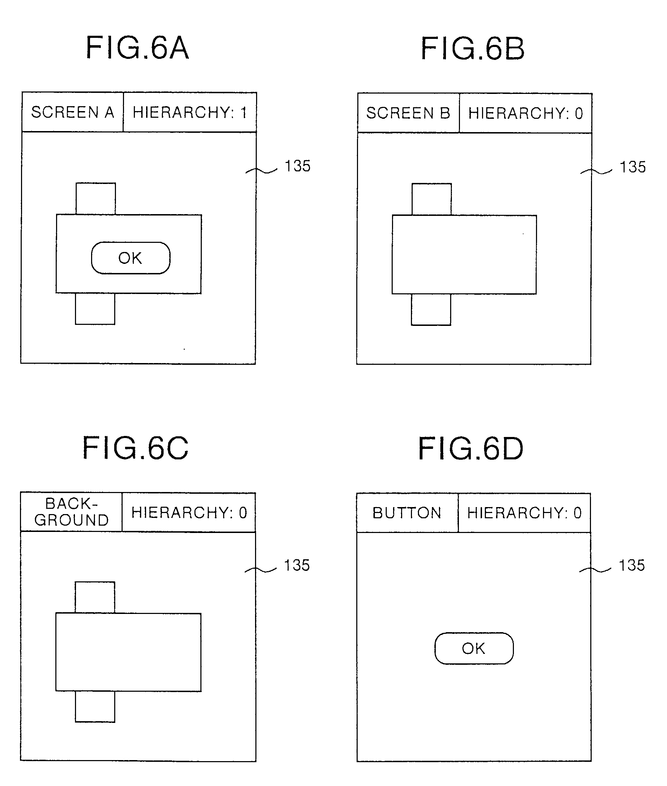

Fig. 6A to Fig. 6D are schematic diagrams which show one example of screen layout charts 135 which are now being edited by the screen layout editor 120. Fig. 6A shows a screen layout chart of screen A in the screen transition diagram shown in Fig. 5, Fig. 6B shows a screen layout chart of screen B, Fig. 6C shows a screen layout chart of background, and Fig. 6D shows a screen layout chart of button. In this embodiment, in the screen layout chart of screen A, the screen layout charts of the background and the button are respectively used as components . In the screen layout chart of screen B, the background screen layout chart is used as a component. In this manner, by registering a button and a background as components, the same component can be referred to from numbers of screen layout charts and screen transition diagrams, and hence it is not necessary to prepare the same screen layout chart respectively and separately for each screen layout chart or screen transition diagram. Thereby, the number of necessary screen layout charts can be reduced, thereby enabling easy control of the screen layout charts. Further, it is also possible to provide a loop for screen layout charts by a user, and to create a folder different for each group to control the screen layout charts in a unit of group.

In these screen layout charts, the upper left column shows a display name, and the upper right column shows a current hierarchy. Here, the hierarchy stands for a screen layout chart to be edited and displayed stepwise in the screen layout chart. Screen A shown in Fig. 6A has two hierarchies, hierarchy 1 and hierarchy 0. In the hierarchy 0 in screen A, the background component (screen layout chart) is referred to, and in the hierarchy 1, the button component (screen layout chart) is further referred to. Fig. 6A shows the display state in the instance of hierarchy 1, but in the instance of hierarchy 0, the state changes from the screen in Fig . 6A to the display state which shows only the background without having the button component.

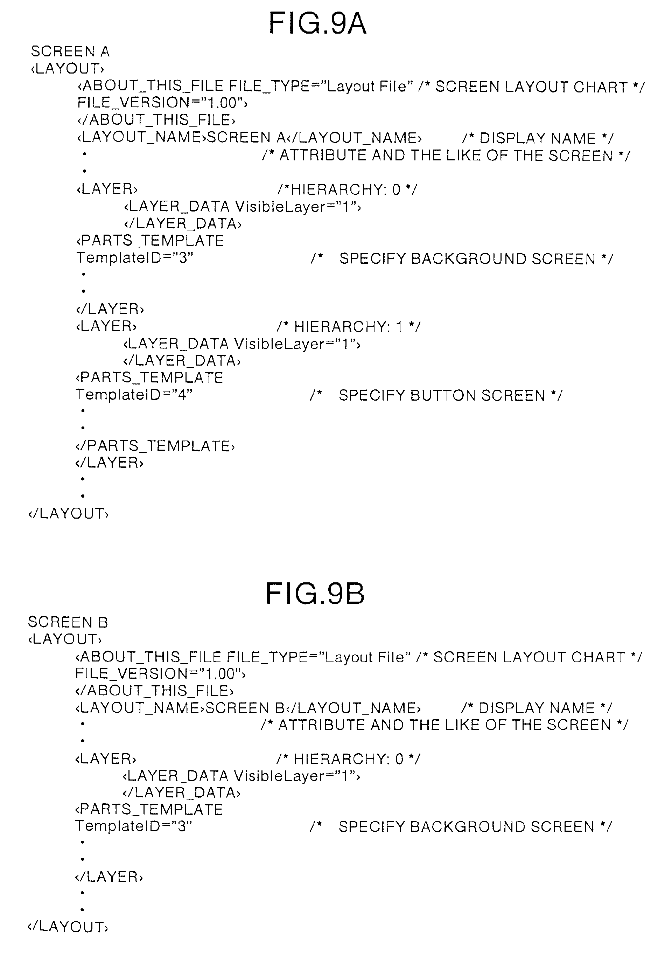

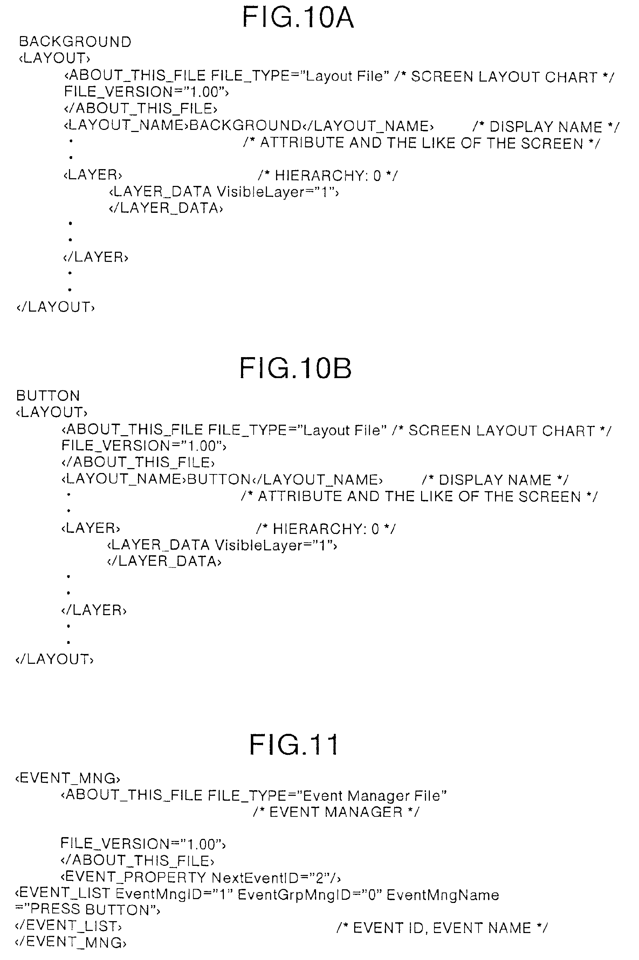

Figs. 9A, 9B and Figs. 10A, 10B are explanatory diagrams which show the content of an XML file of a screen layout chart created based on a screen layout chart prepared or edited by the screen layout editor 120. Fig. 9A shows an XML file of screen A and Fig. 9B shows an XML file of screen B, and Fig. 10A shows an XML file of background and Fig. 10B shows an XML file of button.

Only Fig. 9A will be explained. As shown in Fig. 9, in the XML file of screen A, "Layout File" indicating the file type is automatically set, and a display name of a screen layout chart specified by a user is set. As shown in Fig. 9A, the number of Layer tags corresponding to the number of hierarchies specified by the user is set, and in each tag, a screen layout ID of the screen layout chart to be referred to in each hierarchy is set. In the example shown in Fig. 9A, since a background is referred to at hierarchy 0 on screen A, 3 which is a screen layout ID of the background is set in the TemplateID in the Layer tag of hierarchy 0. Further, since a button is referred to at hierarchy 1 on screen A, 4 which is a screen layout ID of the button is set in the TemplateID in the Layer tag of hierarchy 1.

Accordingly, when a user specifies a hierarchy when performing the editing work of a screen layout chart by the screen layout editor, the screen layout chart specified by the TemplateID in this XML file is displayed on the editing screen, thereby enabling editing for each hierarchy.

Each of the XML files of respective screen layout charts shown in Fig. 9B, Fig. 10A and Fig. 10B is the same as Fig. 9A, except that the files in these figures have only one hierarchy, and hence the explanation thereof is omitted.

The event manager file 132 created by the screen transition diagram editing apparatus in this embodiment will be explained. Fig. 11 is an explanatory diagram which shows the content of an XML file of the event manager file 132, in which an event "press button" is registered in the screen transition diagram shown in Fig. 5. This event manager file 132 is created by the screen transition diagram editor in the manner described later.

As shown in Fig. 11, in the XML file in the event manager file 132, the event ID created by the project controller 100 is associated with the event name "press button". Therefore, when the screen transition diagram is edited by using the screen transition diagram editor, the editor reads out the event name corresponding to the event ID set in the XML file of the screen transition diagram from the event manager file 132, to display the event name on the editing screen.

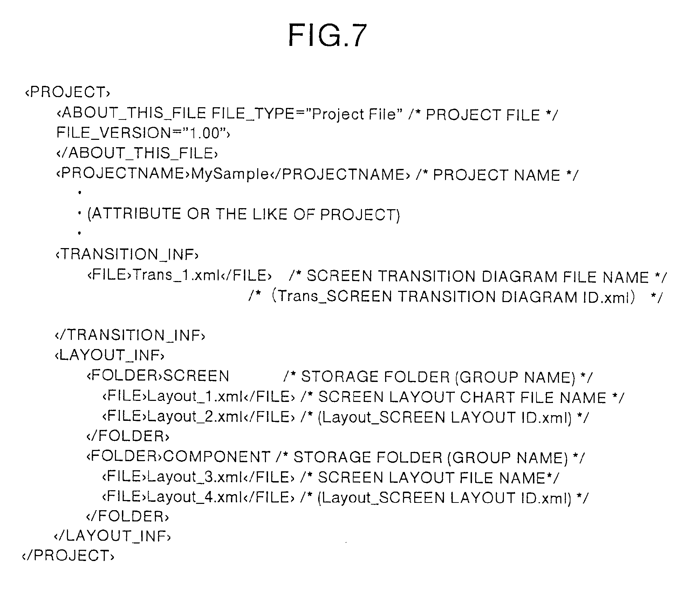

The project file 131 created by the screen transition diagram editing apparatus in this embodiment will now be explained. Fig. 7 is an explanatory diagram which shows the content of an XML file in a project file, when the screen transition diagram and the screen layout chart shown in Fig. 5 and Figs. 6A to 6D are prepared.

As shown in Fig. 7, a file name of a screen transition diagram is set in the XML file of the project file 131 in the format of "Trans_(screen transition diagram ID) .xml", and a file name of a screen layout chart is set therein in the format of "Layout_(screen layout ID).xml". That is, by performing control such that each ID determined by the project controller 100 is used for a file name to identify each file, it becomes possible to carry out the editing work using the screen transition diagram editor and the screen layout editor, without requiring the user to give special consideration to a file name of each screen transition diagram and each screen layout chart.

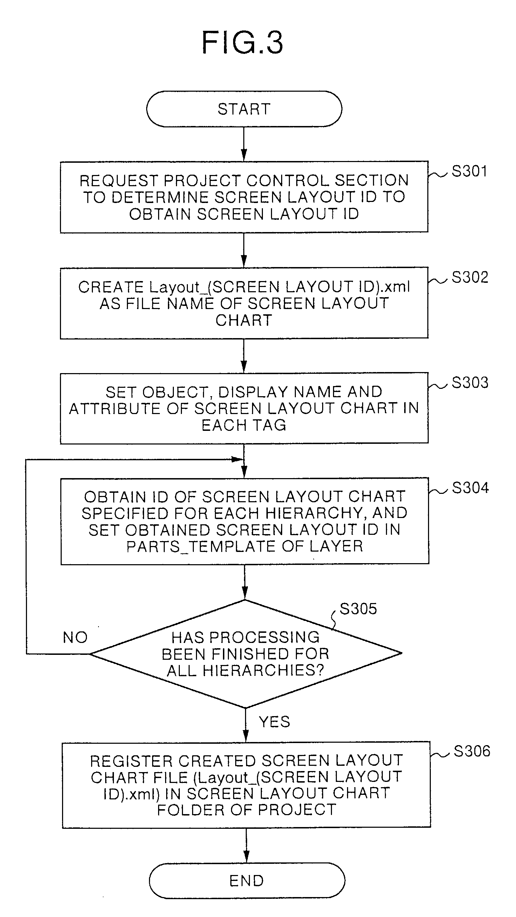

The creation processing of each XML file of the screen layout charts and the screen transition diagrams controlled in this manner will be explained below. Fig. 3 is a flowchart which shows a procedure of creation processing of a screen layout chart by the screen layout editor 120.

When a user completes a screen layout chart using the editing screen of the screen layout editor 120 and issues an instruction of storage, the screen layout output section 123 of the editor 120 performs processing described below.

At first, the screen layout output section 123 requests the project controller 100 to determine a screen layout ID of the prepared screen layout chart, to obtain the determined screen layout ID from the project controller 100 (step S301) , and then creates a file name of the screen layout chart, using this screen layout ID (step S302). Here, the file name of the screen layout chart is created as Layout_(screen layout ID).xml.

The information such as the object of the screen layout chart, the display name prepared by the user and the attribute of the screen layout chart, which are to be set in the XML file of the screen layout chart, is respectively set in the relevant tag shown in Figs. 9A and 9B or Figs. 10A and 10B (step S303).

The screen layout ID of the screen layout chart identified for each hierarchy is obtained, and the obtained screen layout ID is set in PARTS_TEMPLATE of the LAYER tag (step S304). Such processing for hierarchy is repetitively carried out for all hierarchies existing in the screen layout chart (step S305).

The file of the created screen layout chart (set in each tag) is stored in the "screen layout chart" folder in the "project" folder shown in Fig. 2 (step S306). Thereby, the creation processing of the XML file of the screen layout chart is completed. In this manner, file names of the screen layout charts and a screen layout chart specified in each hierarchy are automatically set.

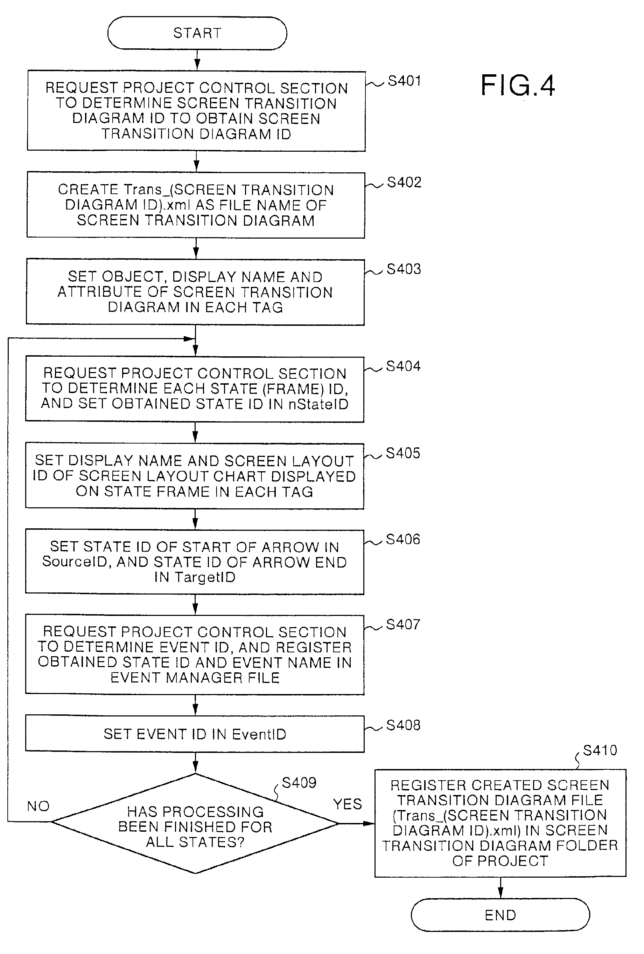

Fig. 4 is a flowchart which shows the procedure of creation processing of a screen transition diagram by the screen transition diagram editor 110. When a user completes a screen transition diagram using the editing screen of the screen transition diagram editor 110 and issues an instruction of storage, the screen transition diagram output section 113 in the screen transition diagram editor 110 performs the following processing.

The screen transition diagram output section 113 requests the project controller 100 to determine a screen transition diagram ID of the prepared screen transition diagram, to obtain the determined screen transition diagram ID from the project controller 100 (step S401), and then creates a file name of the screen transition diagram, using this screen transition diagram ID (step S402). Here, the file name of the screen transition diagram is created as Trans_(screen transition diagram ID).xml.

The information such as the object of the screen transition diagram, the display name prepared by the user and the attribute of the screen transition diagram, which are to be set in the XML file of the screen transition diagram, is respectively set in the relevant tag shown in Fig. 8 (step S403) .

Determination of a state ID of the state frame prepared in the screen transition diagram is requested to the project controller 100, to obtain the determined state ID from the project controller 100, and the obtained state ID is set in nStateID of a TRANSITION_COMMON tag shown in Fig. 8 (step S404). The display name of the screen layout chart displayed in the state frame and the screen layout ID are set in each relevant tag (step S405).

A state ID of the state frame corresponding to the start of an arrow is set in SourceID of a TRANSITION DETAIL tag, and a state ID of the state frame corresponding to the end of the arrow is set in TargetID (step S406). Determination of an event ID of an event such as "press button" is further requested to the project controller 100, to obtain the determined event ID from the project controller 100, and the obtained event ID and an event name such as "press button" are registered in the XML file in the event manager file 132 (step S407). The obtained event ID is set in EventID of the TRANSITION_DETAIL tag (step S408) shown in Fig. 8. The processing of from step S404 to step S408 is repetitively carried out with respect to all state frames displayed on the editing screen (step S409).

When the processing for all the state frames is finished, the XML file of the created screen transition diagram is stored in the "screen transition diagram" folder in the "project" folder shown in Fig. 2 (step S410). Thereby, the creation processing of the XML file of the screen transition diagram is completed. In this manner, the file name of the screen transition diagram, the screen layout ID of the screen layout chart displayed on the state frame, the arrow and events are all set automatically.

When the thus created screen transition diagram is called up for editing by the screen transition diagram editor, a file name of the screen layout chart being used in the transition diagram is created from the screen layout ID for each state frame set in the XML file of the screen transition diagram, the XML file having the created file name is read out from the "screen layout chart" folder and displayed on the editing screen. Further, an arrow and an event are also displayed automatically on the editing screen, based on the content of the event ID and the like set in the XML file of the screen transition diagram.

As described above, in the screen transition diagram editing apparatus in this embodiment, a screen transition diagram can be created and edited corresponding to a screen layout chart, and screen layout charts and screen transition diagrams are stored separately in the storage section 130, and hence it is not necessary for a user to give special consideration to the screen layout charts during preparation and editing of a screen transition diagram. As a result, the screen transition diagram can be easily created. Further, it is not necessary for a user to explicitly search the screen layout charts, and hence the control of the screen layout charts and the screen transition diagrams can be easily performed.

In the screen transition diagram editing apparatus of this embodiment, since a screen transition diagram ID is used for a file name of a screen transition diagram, and a screen layout ID is used for a file name of a screen layout chart, it is not necessary to additionally provide a correspondence table between each file name and each ID, thereby enabling the control of screen transition diagrams and screen layout charts by a simple method, while saving the resources. As a result, there is an advantage in improving the processing speed for the screen transition diagram editing apparatus which has to create, edit, and control much more screen transition diagrams and screen layout charts than the general drawing tool.

In the screen transition diagram editing apparatus of this embodiment, since the screen layout editor creates and controls screen layout charts in a hierarchical structure, screen layout charts which change stepwise can be stored in a plurality of hierarchies, and edited for each hierarchy. As a result, there is an advantage in that a screen layout chart most suitable for the transition situation of the screen layout chart specific to a screen transition diagram can be created and edited.

In the screen transition diagram editing apparatus of this embodiment, the screen transition diagrams, screen layout charts, the event manager file and the project file are all created as an XML file. However, it is also possible to create these as a file described in other markup language such as an HTML format or a file of other source format or executable format.

In the screen transition diagram editing apparatus of this embodiment, description has been given only up to the creation of the XML files of screen transition diagrams and the screen layout charts. However, there may be separately provided a code generation section which automatically generates a program (a source code or a code of an executable format) for controlling screens from the created XML files of screen transition diagrams and the screen layout charts.

As explained above, according to the one aspect of the present invention, it is not necessary for a user to give special consideration to the screen layout charts during preparation and editing of a screen transition diagram, and hence the screen transition diagram can be easily created. Further, according to this aspect, it is not necessary for the user to search a screen layout chart, and hence the labor for management of the screen layout charts and the screen transition diagrams can be reduced.

Moreover, it is possible to create and edit a screen layout chart most suitable for the transitional situation of a screen layout chart specific to a screen transition diagram.

According to the another aspect of the present invention, it is not necessary for a user to give special consideration to the screen layout charts during preparation and editing of a screen transition diagram, and hence the screen transition diagram can be easily created. Further, according to the third aspect, it is not necessary to search a screen layout chart, and hence labor for management of the screen layout charts and the screen transition diagrams can be reduced.

Furthermore, it is possible to create and edit a screen layout chart most suitable for the transitional situation of a screen layout chart specific to a screen transition diagram.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A screen transition diagram editing apparatus comprising:
a screen layout editing unit that creates and edits screen layout charts which are used in screen transition diagrams each showing a transition state of screens, and which show individual transitional screens;
a screen transition diagram editing unit which creates and edits the screen transition diagrams each associated with the screen layout charts; and
a storage unit which stores the screen layout charts and the screen transition diagrams separately.

2. The screen transition diagram editing apparatus according to claim 1, wherein the screen layout editing unit creates the screen layout charts in a hierarchical structure.

3. A screen transition diagram editing program which causes a computer to execute steps of:
creating and editing screen layout charts which are used in screen transition diagrams each showing a transition state of screens and which show individual transitional screens;
creating and editing the screen transition diagrams each associated with the screen layout charts; and
storing the screen layout charts and the screen transition diagrams separately.

4. The screen transition diagram editing program according to claim 3, wherein at the screen layout editing step, the screen layout charts are created in a hierarchical structure.
